(19) Europäisches Patentamt
European Patent Office
Office européen des brevets

(11) **EP 4 679 700 A1**

(12) **EUROPEAN PATENT APPLICATION**
published in accordance with Art. 153(4) EPC

(43) Date of publication:
**14.01.2026 Bulletin 2026/03**

(21) Application number: **24779734.3**

(22) Date of filing: **19.03.2024**

(51) International Patent Classification (IPC):
**H02M 7/12** *(2006.01)*

(52) Cooperative Patent Classification (CPC):
**H02M 7/12**

(86) International application number:
**PCT/JP2024/010728**

(87) International publication number:
**WO 2024/203609 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058634**

(71) Applicant: Daikin Industries, Ltd.
**Osaka-shi, Osaka 530-0001 (JP)**

(72) Inventors:
• **KAWASHIMA, Reiji**
**Osaka-shi, Osaka 530-0001 (JP)**
• **DOI, Hirotaka**
**Osaka-shi, Osaka 530-0001 (JP)**
• **KONO, Masaki**
**Osaka-shi, Osaka 530-0001 (JP)**
• **KOJIMA, Hiroki**
**Osaka-shi, Osaka 530-0001 (JP)**

(74) Representative: Hoffmann Eitle
**Patent- und Rechtsanwälte PartmbB
Arabellastraße 30
81925 München (DE)**

(54) **POWER CONVERSION DEVICE AND AIR CONDITIONING SYSTEM INCLUDING SAME**

(57) The expression (1) below holds, where Vmax (V) represents a maximum input voltage value of a power converter (100), La (μH) represents an inductance of AC reactors (13), Vp (V) represents a withstand voltage of switching elements (Sr1, Sr2, Ss1, Ss2, St1, St2), and Cf (μF) represents capacitive components (15) between phases. The power converter (100) includes: a current limiting circuit (16) including two main circuit relays (16a) for two of three-phase electric paths between a three-phase AC power supply (2) and a converter unit (11), and a current limiting element (16b) connected in parallel to at least one of the two main circuit relays (16a).

$$La < [\{Vp/(\sqrt{2} * Vmax) - 1\}/\{(1.15 + Cf) * 1.33\}]^{-5/3} \ldots (1)$$

FIG.2

EP 4 679 700 A1

**Description**

TECHNICAL FIELD

The present disclosure relates to a power converter including a converter unit connected to a three-phase AC power supply via reactors, and an air conditioning system including the power converter.

BACKGROUND ART

Patent Document 1 discloses a power converter including a converter unit connected to a three-phase AC power supply via AC reactors and including multiple switching elements, a smoothing capacitor connected between DC nodes of the converter unit, filter reactors connected in series with the AC reactors on the side of the AC reactors closer to the three-phase AC power supply, and capacitive components connected between the filter reactors and the AC reactors.

CITATION LIST

PATENT DOCUMENT

Patent Document 1: International Patent Publication No. WO 2020/016960

SUMMARY OF THE INVENTION

TECHNICAL PROBLEMS

In the power converter as disclosed in Patent Document 1, at the time of power-on and restoration from a power failure, a filter circuit including the AC reactors resonates in accordance with a transitional voltage fluctuation. With a decrease in the inductance of the AC reactors, the peak value of the current flowing through the converter unit increases at the time of the resonance, and a voltage exceeding the maximum rated voltage is applied to the switching elements of the converter unit, which may cause destruction of the switching elements.

It is an object of the present disclosure to reduce destruction of switching elements of a converter unit due to an overvoltage at the time of power-on and restoration from a power failure.

SOLUTION TO THE PROBLEMS

A first aspect of the present disclosure is directed to a power converter including: a converter unit (11) connected to a three-phase alternating current (AC) power supply (2) via AC reactors (13) provided for respective phases, and including multiple switching elements (Sr1, Sr2, Ss1, Ss2, St1, St2); a smoothing capacitor (12) connected between DC nodes (11a, 11b) of the converter unit (11); filter reactors (14) connected in series with the AC reactors (13) on a side of the AC reactors (13) closer to the three-phase AC power supply (2); and capacitive components (15) connected between the filter reactors (14) and the AC reactors (13) and provided between the phases, an expression (1) below holds, where Vmax (V) represents a maximum input voltage value of the power converter (100), La ($\mu$H) represents an inductance of the AC reactors (13), Vp (V) represents a withstand voltage of the switching elements (Sr1, Sr2, Ss1, Ss2, St1, St2), and Cf ($\mu$F) represents the capacitive components (15) between the phases, and the power converter further includes: a current limiting circuit (16) including two main circuit relays (16a) for two of three-phase electric paths between the three-phase AC power supply (2) and the converter unit (11), and a current limiting element (16b) connected in parallel to at least one of the two main circuit relays (16a).

$$La < [\{Vp/(\sqrt{2} * Vmax) - 1\}/\{(1.15 + Cf) * 1.33\}]^{-5/3} \ldots (1)$$

In the first aspect, even if the inductance of the AC reactors (13) is set so that the expression (1) holds, the inrush current flowing through the converter unit (11) and the peak value of the voltage applied to the switching elements (Sr1, Sr2, Ss1, Ss2, St1, St2) of the converter unit (11) can be reduced by turning off the main circuit relays (16a) at the time of power-on and restoration from a power failure. This can reduce destruction of the switching elements (Sr1, Sr2, Ss1, Ss2, St1, St2) of the converter unit (11) due to an overvoltage at the time of power-on and restoration from the power failure.

A second aspect of the present disclosure is an embodiment of the first aspect. In the second aspect, the current limiting circuit (16) is connected between the three-phase AC power supply (2) and the capacitive components (15).

In the second aspect, the inrush current flowing through the filter reactors (14), the AC reactors (13), and the capacitive components (15) can be reduced by turning off the main circuit relays (16a) at the time of power-on and restoration from a power failure. This can reduce the heat generation at the filter reactors (14) and the AC reactors (13) and a decrease in the capacitance of the capacitive components (15).

A third aspect of the present disclosure is an embodiment of the first or second aspect. In the third aspect, the following expression (2) holds, where Lf (μF) represents an inductance of the filter reactors (14).

$$La/2 \geq Lf \geq La/8 \ldots (2)$$

In the third aspect, the filter reactors (14) can be smaller than in the case where the inductance of the filter reactors (14) is larger than La/2, which can downsize the power converter (100). In addition, as compared with the case where the inductance of the filter reactors (14) is smaller than La/8, a high-frequency current flowing between the filter reactors (14) and the three-phase AC power supply (2) can be reduced more effectively at the time of power-on and restoration from a power failure.

A fourth aspect of the present disclosure is an embodiment of any one of the first to third aspects. In the fourth aspect, the power converter further includes: a switching element driving circuit (17b) supplied with a switch driving voltage (Vdr) and configured to drive the switching elements (Sr1, Sr2, Ss1, Ss2, St1, St2); and a relay driving circuit (17c) configured to turn off the two main circuit relays (16a), if a relay driving voltage (Vdr) is lower than a predetermined off threshold (THoff), and the off threshold (THoff) is higher than a value of the switch driving voltage (Vdr) required for the switching element driving circuit (17b) to normally drive the switching elements (Sr1, Sr2, Ss1, Ss2, St1, St2).

In the fourth aspect, when the switch driving voltage (Vdr) and the relay driving voltage (Vdr) are equal to each other, the on/off of the switching elements (Sr1, Sr2, Ss1, Ss2, St1, St2) becomes uncertain after the two main circuit relays (16a) are turned into off-state at the time of a power failure. After that, once the power supply restarts, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

A fifth aspect of the present disclosure is an embodiment of the fourth aspect. In the fifth aspect, the switch driving voltage (Vdr) and the relay driving voltage (Vdr) are supplied from a common power supply circuit (17d).

In the fifth aspect, the switch driving voltage (Vdr) and the relay driving voltage (Vdr) can be reliably equal to each other. When the switch driving voltage (Vdr) decreases due to a power failure, the two main circuit relays (16a) can be reliably turned into off-state before the on/off of the switching elements (Sr1, Sr2, Ss1, Ss2, St1, St2) becomes uncertain.

A sixth aspect of the present disclosure is an embodiment of any one of the first to fifth aspects. In the sixth aspect, the power converter further includes: a control unit (17a) configured to generate a control signal (Scr) for designating on/off of the two main circuit relays (16a), if a control voltage (Vcon) is higher than or equal to a predetermined control threshold (THm), and stop generating the control signal (Scr), if the control voltage (Vcon) is lower than the control threshold (THm); a switching element driving circuit (17b) supplied with a switch driving voltage (Vdr) and configured to drive the switching elements (Sr1, Sr2, Ss1, Ss2, St1, St2); and a relay driving circuit (17c) configured to control on/off of the two main circuit relays (16a) based on the control signal (Scr), if a relay driving voltage (Vdr) is higher than or equal to a predetermined off threshold (THoff), and turn off the two main circuit relays (16a), if generation of the control signal (Scr) is stopped and if the relay driving voltage (Vdr) is lower than the off threshold (THoff); a switching element driving power supply (17d) configured to supply the switch driving voltage (Vdr) to the switching element driving circuit (17b) using electric power from the three-phase AC power supply (2); and a control unit power supply (17e) configured to supply the control voltage (Vcon) to the control unit (17a) using electric power from the three-phase AC power supply (2), and the control voltage (Vcon) becomes lower than the control threshold (THm) before the switch driving voltage (Vdr) becomes lower than a voltage (THdr) required for normal driving of the switching elements (Sr1, Sr2, Ss1, Ss2, St1, St2), when an amplitude of a voltage input to the power converter (100) decreases.

In the sixth aspect, with a decrease in the amplitude of the voltage input to the power converter (100) due to a power failure, the control voltage (Vcon) becomes lower than the control threshold (THm) before the switch driving voltage (Vdr) becomes lower than the voltage (THdr) required for normal driving of the switching elements (Sr1, Sr2, Ss1, Ss2, St1, St2). The relay driving circuit (17c) then turns off the main circuit relays (16a). After that, the on/off of the switching elements (Sr1, Sr2, Ss1, Ss2, St1, St2) becomes uncertain due to a decrease in the switch driving voltage (Vdr). When the power supply restarts in this state, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

A seventh aspect of the present disclosure is an embodiment of any one of the first to fifth aspects. In the seventh aspect, the power converter further includes: a switching element driving circuit (17b) supplied with a switch driving voltage (Vdr) and configured to drive the switching elements (Sr1, Sr2, Ss1, Ss2, St1, St2); and a control unit (17a) configured to turn off the two main circuit relays (16a) when the switch driving voltage (Vdr) becomes lower than or equal to a predetermined drive threshold.

In the seventh aspect, the predetermined drive threshold is set to be higher than or equal to the switch driving voltage (Vdr), at which the on/off of the switching elements (Sr1, Sr2, Ss1, Ss2, St1, St2) is uncertain, which can reduce the uncertainty of the on/off of the switching elements (Sr1, Sr2, Ss1, Ss2, St1, St2) before the main circuit relays (16a) are turned off.

An eighth aspect of the present disclosure is an embodiment of any one of the first to fifth aspects. In the eighth aspect, the power converter further includes: a switching element driving circuit (17b) supplied with a switch driving voltage (Vdr) and configured to drive the switching elements (Sr1, Sr2, Ss1, Ss2, St1, St2) based on a control signal (Scr) for designating on/off of the switching elements (Sr1, Sr2, Ss1, Ss2, St1, St2); and a control unit (17a) configured to turn on the two main circuit relays (16a) with the switching elements (Sr1, Sr2, Ss1, Ss2, St1, St2) turned off, referring to at least one of the control signal (Scr), the switch driving voltage (Vdr), or gate potentials of the switching elements (Sr1, Sr2, Ss1, Ss2, St1, St2), once a predetermined requirement for switching the two main circuit relays (16a) from off to on is met.

When the main circuit relays (16a) are turned on while the on/off of the switching elements (Sr1, Sr2, Ss1, Ss2, St1, St2) is uncertain, the switching elements (Sr1, Sr2, Ss1, Ss2, St1, St2) may malfunction due to external noise, for example, which may cause destruction of the switching elements (Sr1, Sr2, Ss1, Ss2, St1, St2). In the eighth aspect, the main circuit relays (16a) are turned on with the switching elements (Sr1, Sr2, Ss1, Ss2, St1, St2) turned off, which can reduce such destruction of the switching elements (Sr1, Sr2, Ss1, Ss2, St1, St2).

A ninth aspect of the present disclosure is an embodiment of any one of the first to fifth aspects. In the ninth aspect, the power converter further includes: a control unit (17a) configured to turn off the two main circuit relays (16a), once a turn-off requirement is met that a voltage of the smoothing capacitor (12) is lower than or equal to a predetermined capacitor voltage threshold (Vdr).

In the ninth aspect, once the voltage of the smoothing capacitor (12) becomes lower than or equal to the predetermined capacitor voltage threshold due to a power failure, the two main circuit relays (16a) are turned off. After that, once the power supply restarts, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

A tenth aspect of the present disclosure is an embodiment of any one of the first to fifth aspects. In the tenth aspect, the power converter further includes: a control unit (17a) configured to turn off the two main circuit relays (16a), once a turn-off requirement is met that an amount of decrease in a voltage of the smoothing capacitor (12) per predetermined unit of time is lower than or equal to a predetermined decrease amount threshold.

In the tenth aspect, once the amount of decrease in the voltage of the smoothing capacitor (12) per predetermined unit of time becomes larger than or equal to the predetermined decrease amount threshold due to a power failure, the two main circuit relays (16a) are turned off. After that, once the power supply restarts, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

An eleventh aspect of the present disclosure is an embodiment of any one of the first to fifth aspects. In the eleventh aspect, the power converter further includes: a control unit (17a) configured to turn off the two main circuit relays (16a), once a turn-off requirement is met that a voltage drop state in which a voltage received from the three-phase AC power supply (2) is lower than a predetermined power supply voltage threshold continues for a predetermined time.

In the eleventh aspect, once the voltage drop state, in which the voltage received from the three-phase AC power supply (2) is lower than the predetermined power supply voltage threshold, continues for a predetermined time due to a power failure, the two main circuit relays (16a) are turned off. After that, once the power supply restarts, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

A twelfth aspect of the present disclosure is an embodiment of any one of the ninth to eleventh aspects. In the twelfth aspect, the control unit (17a) turns off the switching elements (Sr1, Sr2, Ss1, Ss2, St1, St2), once the turn-off requirement is met, and then turns off the two main circuit relays (16a).

In the twelfth aspect, once the turn-off requirement is met due to a power failure, the two main circuit relays (16a) are turned off. After that, once the power supply restarts, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

A thirteenth aspect of the present disclosure is an embodiment of any one of the first to twelfth aspects. In the thirteenth aspect, the switching elements (Sr1, Sr2, Ss1, Ss2, St1, St2) are unipolar devices mainly made of wide-bandgap semiconductor.

In the thirteenth aspect, the switching frequency of the switching elements (Sr1, Sr2, Ss1, Ss2, St1, St2) can increase and the inductance of the AC reactors (13) can decrease.

A fourteenth aspect of the present disclosure is directed to an air conditioning system (1) including: the power converter of any one of the first to thirteenth aspects; and a compressor (300) supplied with electric power generated using the power converter (100).

BRIEF DESCRIPTION OF THE DRAWINGS

[FIG. 1] FIG. 1 is a block diagram showing a schematic configuration of an air conditioning system including a power converter according to a first embodiment.
[FIG. 2] FIG. 2 is a circuit diagram of the power converter according to the first embodiment.
[FIG. 3] FIG. 3 is a circuit diagram of a converter unit.
[FIG. 4] FIG. 4 is a block diagram showing a configuration of a converter control device.
[FIG. 5] FIG. 5 is a flowchart showing an operation of a control unit at the time of turning on main circuit relays.
[FIG. 6] FIG. 6 is a timing diagram illustrating a driving voltage, the state of the main circuit relays, and the state of switching elements at the time of a power failure.
[FIG. 7] FIG. 7 is a timing diagram illustrating the driving voltage, a control voltage, the state of the main circuit relays, and the state of the switching elements at the time of a power failure.
[FIG. 8] FIG. 8 is a graph showing the relationship between the inductance of AC reactors and a PN voltage, where the capacitance of the filter capacitors is set to 1.1 $\mu$F, 2.2 $\mu$F, and 3.3 $\mu$F.
[FIG. 9] FIG. 9 is a timing diagram showing waveforms of a filter reactor current, an AC reactor current, and a PN voltage at the time of power-on, where the inductance of the filter reactors is 40 $\mu$H, the inductance of the AC reactors is 80 $\mu$H, the capacitance of the filter capacitors is 2.2 $\mu$F, and the effective value of the voltage input to the power converter is 253 V.
[FIG. 10] FIG. 10 is a diagram corresponding to FIG. 9 and showing that the filter reactors have an inductance of 20 $\mu$H.
[FIG. 11] FIG. 11 is a diagram corresponding to FIG. 4 and illustrating a second embodiment.
[FIG. 12] FIG. 12 is a timing diagram showing waveforms of a filter reactor current, an AC reactor current, and a PN voltage, where the inductance of the filter reactors is 15 $\mu$H, the inductance of the AC reactors is 60 $\mu$H, the capacitance of the filter capacitors is 2.2 $\mu$F, and the effective value of the voltage input to the power converter is 253 V in the second embodiment.
[FIG. 13] FIG. 13 is a diagram corresponding to FIG. 12 and illustrating the first embodiment.
[FIG. 14] FIG. 14 is a diagram corresponding to FIG. 2 and illustrating a third embodiment.

DESCRIPTION OF EMBODIMENTS

Embodiments will be described below with reference to the drawings. The following embodiments are merely exemplary ones in nature, and are not intended to limit the scope, applications, or use of the present invention.

(First Embodiment)

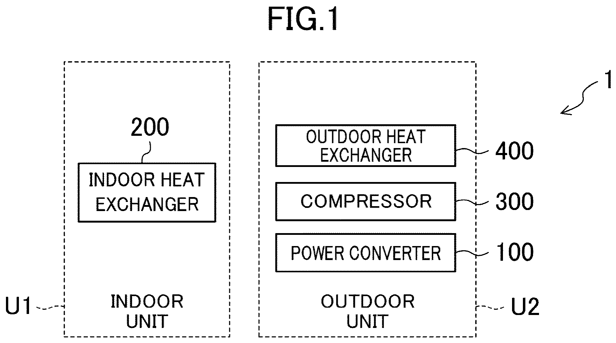

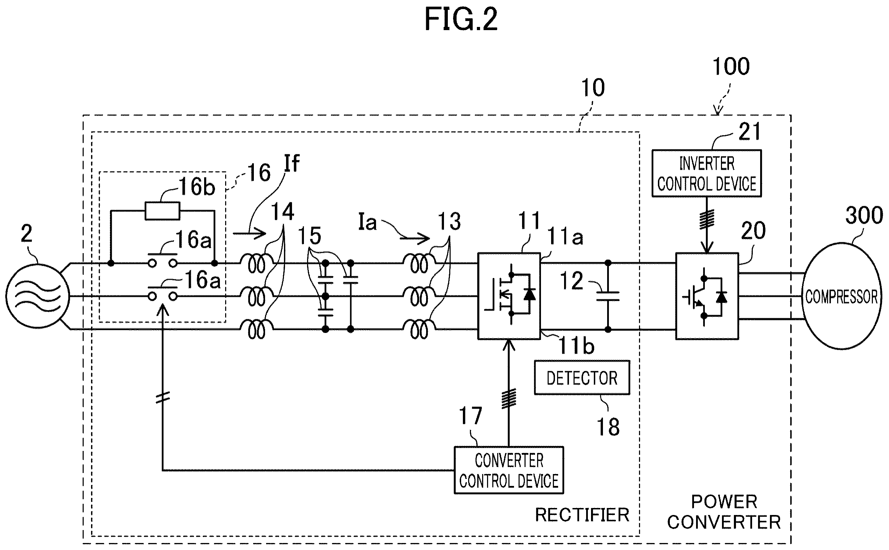

An air conditioning system (1) shown in FIG. 1 includes an indoor unit (U1) and an outdoor unit (U2).
The indoor unit (U1) includes an indoor heat exchanger (200).
The outdoor unit (U2) includes a power converter (100) according to a first embodiment of the present disclosure, a compressor (300), and an outdoor heat exchanger (400).
In this air conditioning system (1), in a cooling operation, the compressor (300) compresses a refrigerant, the outdoor heat exchanger (400) transfers heat of the refrigerant to outdoor air, and the indoor heat exchanger (200) transfers heat of indoor air to the refrigerant. On the other hand, in a heating operation, the compressor (300) compresses the refrigerant, the indoor heat exchanger (200) transfers heat of the refrigerant to the indoor air, and the outdoor heat exchanger (400) transfers heat of the outdoor air to the refrigerant.
The power converter (100) converts the electric power supplied from the three-phase AC power supply (2) and outputs the converted electric power to a motor of the compressor (300). As shown in FIG. 2, the power converter (100) includes a converter device (10), an inverter circuit (20), and an inverter control device (21).

The converter device (10) converts, into DC power, the AC power supplied from the three-phase AC power supply (2) to the power converter (100). The converter device (10) includes a converter unit (11), a smoothing capacitor (12), AC reactors (13), filter reactors (14), filter capacitors (15) as capacitive components, a current limiting circuit (16), a converter control device (17), and a detector (18).

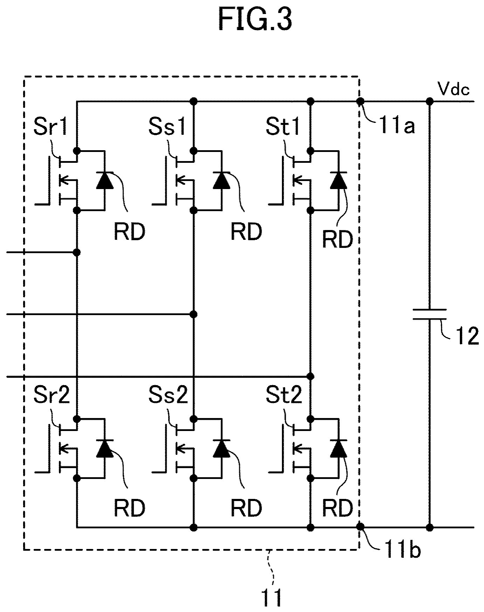

As shown in FIG. 3, the converter unit (11) includes six switching elements (Sr1, Sr2, Ss1, Ss2, St1, St2). The switching elements (Sr1, Sr2, Ss1, Ss2, St1, St2) are unipolar transistors, and are metal oxide semiconductor field effect transistors (MOSFET) made of a wide-bandgap semiconductor as a main material. The six switching elements (Sr1, Sr2, Ss1, Ss2, St1, St2) form three switching legs connected between first and second DC nodes (11a, 11b). Each switching leg includes two switching elements (Sr1, Sr2, Ss1, Ss2, St1, St2) connected to each other in series.

In the three switching legs, the midpoints between upper-arm switching elements (Sr1, Ss1, St1) and lower-arm switching elements (Sr2, Ss2, St2) serve as AC nodes. Each switching element (Sr1, Sr2, Ss1, Ss2, St1, St2) includes a body diode (RD). The body diode (RD) serves as a freewheeling element that causes the current to flow in the opposite direction.

Instead of the unipolar transistors, the switching elements (Sr1, Sr2, Ss1, Ss2, St1, St2) may be insulated gate bipolar transistors (IGBT) which are a bipolar transistor. In this case, the switching elements (Sr1, Sr2, Ss1, Ss2, St1, St2) are connected in antiparallel with the freewheeling diodes.

Even in a case where the switching elements (Sr1, Sr2, Ss1, Ss2, St1, St2) are the unipolar transistors as in the first embodiment, the freewheeling diodes, which are lower in forward voltage than the body diode (RD) as in the configuration in which the switching elements (Sr1, Sr2, Ss1, Ss2, St1, St2) are the IGBTs, may be connected to the respective switching elements (Sr1, Sr2, Ss1, Ss2, St1, St2) in an antiparallel manner.

The smoothing capacitor (12) is connected between DC nodes (11a, 11b) of the converter unit (11). The voltage of the smoothing capacitor (12), that is, the voltage between the DC nodes (11a, 11b) of the converter unit (11) is the PN voltage (Vdc).

The AC reactors (13) are provided for respective phases. One end of each AC reactor (13) is connected to any one of the AC nodes of the converter unit (11). The other end of each AC reactor (13) is connected to the three-phase AC power supply (2) via an associated one of the filter reactors (14). That is, the converter unit (11) is connected to the three-phase AC power supply (2) via the AC reactors (13) provided for the respective phases.

The filter reactors (14) are connected in series with the AC reactors (13) at the side of the AC reactors (13) closer to the three-phase AC power supply (2).

The filter capacitors (15) are connected between the filter reactors (14) and the AC reactors (13), and are provided between the phases. The filter capacitors (15) and the filter reactors (14) constitute a filter.

Here, the expression (1) below holds, where Vmax (V) represents the maximum voltage value input from the three-phase AC power supply (2) to the power converter (100), La ($\mu$H) represents the inductance of the AC reactors (13), Vp (V) represents the withstand voltage of the switching elements (Sr1, Sr2, Ss1, Ss2, St1, St2), and Cf ($\mu$F) represents the capacitive components between the phases, that is, the capacitance of the filter capacitors (15).

$$\mathrm{La} < [\{\mathrm{Vp}/(\sqrt{2} * \mathrm{Vmax}) - 1\}/\{(1.15 + \mathrm{Cf}) * 1.33\}]^{-5/3} \ldots (1)$$

Specifically, Vp (V) represents the maximum rated voltage of the switching elements (Sr1, Sr2, Ss1, Ss2, St1, St2) and the maximum voltage applicable to the switching elements (Sr1, Sr2, Ss1, Ss2, St1, St2) in the off-state. Vmax (V) represents the maximum voltage value at the end of each filter reactor (14) closer to the three-phase AC power supply (2). Vmax (V) represents the highest voltage among the power sources that may be used. Vmax (V) is the maximum voltage defined by the specifications of the power converter (100) or the maximum voltage defined by the specifications of the three-phase AC power supply (2) to be connected (e.g., 253 V obtained by reflecting a voltage variation range +10% on the maximum rated voltage 230 V in the case of a power source of 200 V).

The following expression (2) holds, where Lf ($\mu$F) represents the inductance of the filter reactors.

$$\mathrm{La}/2 \geq \mathrm{Lf} \geq \mathrm{La}/8 \ldots (2)$$

The current limiting circuit (16) includes two main circuit relays (16a) and a current limiting element (16b).

The two main circuit relays (16a) are provided in two of three-phase electric paths between the three-phase AC power supply (2) and the converter unit (11). The two main circuit relays (16a) are connected between the three-phase AC power supply (2) and the filter reactors (14). These two main circuit relays (16a) are connected between the three-phase AC power supply (2) and the filter capacitors (15).

The current limiting element (16b) is connected in parallel with one of the two main circuit relays (16a). The current limiting element (16b) is a resistor, for example. Note that two current limiting elements (16b) may be provided and connected in parallel to the two main circuit relays (16a), respectively.

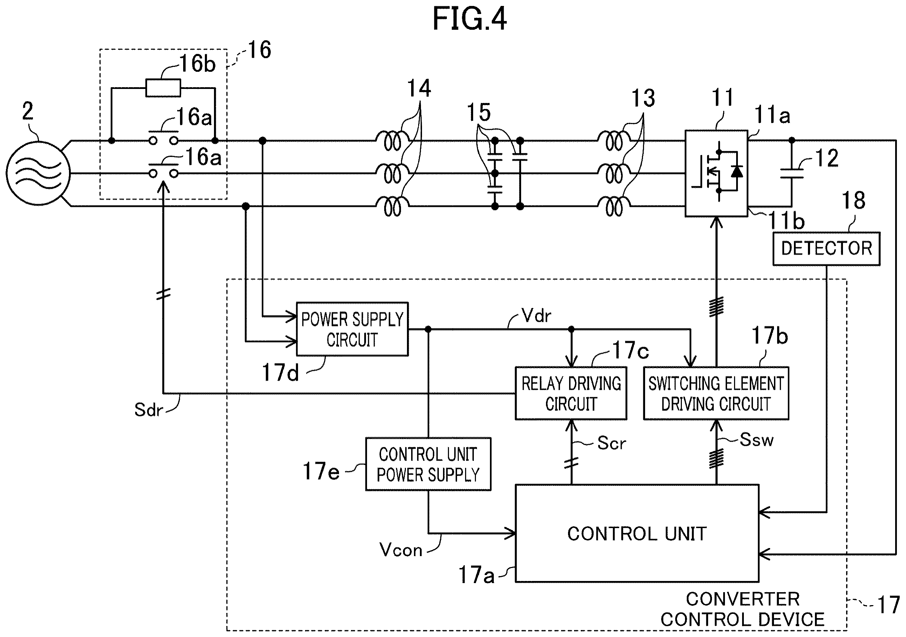

The converter control device (17) controls on/off of the switching elements (Sr1, Sr2, Ss1, Ss2, St1, St2) of the converter unit (11) and on/off of the main circuit relays (16a). Specifically, as shown in FIG. 4, the converter control device (17) includes a control unit (17a), a switching element driving circuit (17b), a relay driving circuit (17c), a power supply circuit (17d), and a control unit power supply (17e).

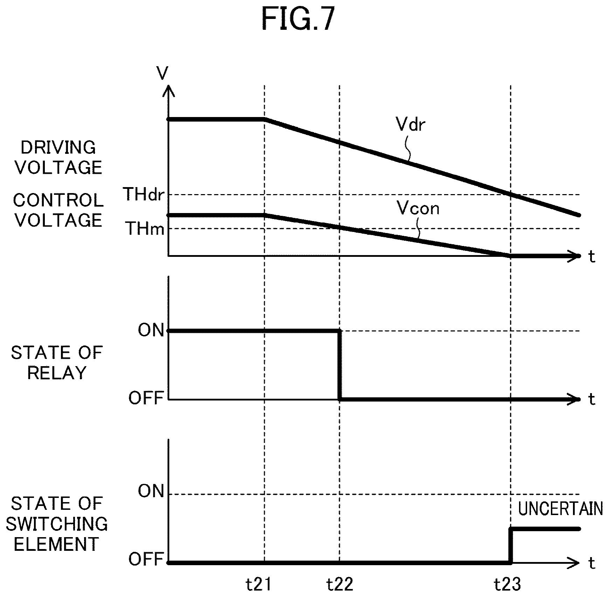

The control unit (17a) includes a microcomputer, a memory, and other suitable components. The control unit (17a) generates a switching element control signal (Ssw) for controlling on/off of each switching element (Sr1, Sr2, Ss1, Ss2, St1, St2). The control unit (17a) generates a relay control signal (Scr) for designating (controlling) the on/off of the two main circuit relays (16a). The control unit (17a) generates the relay control signal (Scr), when a control voltage (Vcon) (see FIG. 7) output by the control unit power supply (17e), which will be described later, is equal to or higher than a predetermined control threshold (THm) (see FIG. 7), and stops generating the relay control signal (Scr) when the control voltage (Vcon) is lower than the control threshold (THm).

If the turn-off requirement is met that the value detected by the detector (18), that is, the voltage of the smoothing capacitor (12) is lower than or equal to the predetermined capacitor voltage threshold, the control unit (17a) sets the switching element control signal (Ssw) to a predetermined value to turn off all the switching elements (Sr1, Sr2, Ss1, Ss2, St1, St2). The control unit (17a) then sets the relay control signal (Scr) to a predetermined value to turn off the two main circuit relays (16a).

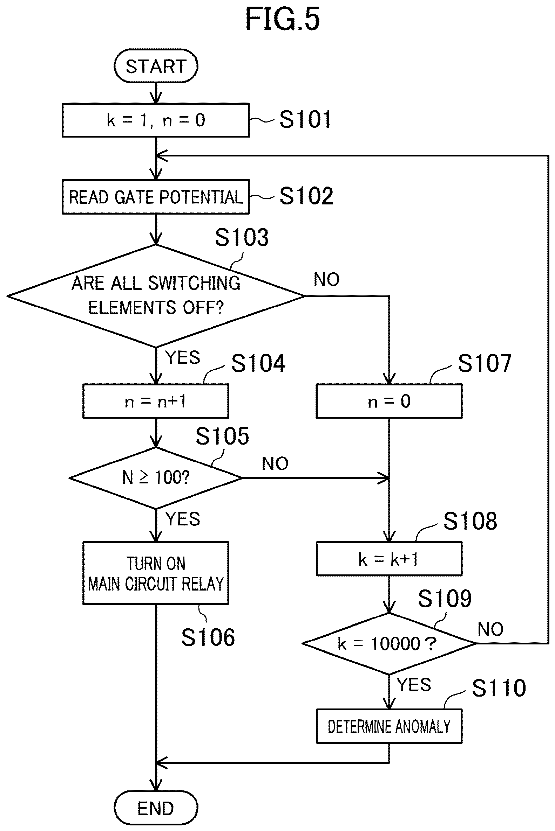

Once a predetermined requirement for switching the two main circuit relays (16a) from off to on is met, the control unit (17a) sets the relay control signal (Scr) to a predetermined value with the switching elements (Sr1, Sr2, Ss1, Ss2, St1, St2) turned off, referring to the gate potentials of the switching elements (Sr1, Sr2, Ss1, Ss2, St1, St2), thereby turning on the two main circuit relays (16a). Here, the predetermined requirement for switching the two main circuit relays (16a) from off to on is, for example, that the voltage of the smoothing capacitor (12) has returned to a value higher than or equal to the predetermined capacitor voltage threshold. The control unit (17a) executes the operation shown in the flowchart of FIG. 5, once the predetermined requirement for switching the two main circuit relays (16a) from off to on is met. Now, the operation in the flowchart of FIG. 5 will be described below.

First, in (S101), the control unit (17a) sets the value k to 1 and the value n to 0.

Next, in (S102), the control unit (17a) reads the gate potentials of all the switching elements (Sr1, Sr2, Ss1, Ss2, St1, St2).

Next, in (S103), the control unit (17a) determines whether all the switching elements (Sr1, Sr2, Ss1, Ss2, St1, St2) are in the off-state, based on the gate potentials read in (S102). If all the switching elements (Sr1, Sr2, Ss1, Ss2, St1, St2) are in the off-state, the control unit (17a) proceeds to the process in (S104). On the other hand, if part or all the switching elements (Sr1, Sr2, Ss1, Ss2, St1, St2) are on, the control unit (17a) proceeds to the process in (S107).

In (S104), the control unit (17a) adds one to the value n.

In (S105), the control unit (17a) determines whether the value n is 100 or more. If the value n is 100 or more, the control unit (17a) proceeds to the process in (S106). On the other hand, if the value n is not 100 or more, the control unit (17a) proceeds to the process in (S108).

In (S106), the control unit (17a) turns on the two main circuit relays (16a) by setting the relay control signal (Scr) to the predetermined value.

In (S107), the control unit (17a) sets the value n to zero.

In (S108), the control unit (17a) adds one to the value k.

In (S109), the control unit (17a) determines whether the value k is 10000.

In (S110), the control unit (17a) determines the occurrence of an anomaly.

Until the process proceeds to (S106) or (S110), the determination in (S103) is repeated at the cycle of 1 ms.

If all the switching elements (Sr1, Sr2, Ss1, Ss2, St1, St2) are continuously turned into off-state for 100 ms or more, the control unit (17a) can turn on the two main circuit relays (16a).

In (S102) and (S103) of FIG. 5, the control unit (17a) determines whether the switching elements (Sr1, Sr2, Ss1, Ss2, St1, St2) are off, referring to the gate potentials of all the switching elements (Sr1, Sr2, Ss1, Ss2, St1, St2). Alternatively, this determination may be made with reference to the switching element control signal (Ssw) or the driving voltage (Vdr). The control unit (17a) may determine whether the switching elements (Sr1, Sr2, Ss1, Ss2, St1, St2) are off, referring to two or more of the switching element control signal (Ssw), the switch driving voltage (Vdr), and the gate potentials of the switching elements (Sr1, Sr2, Ss1, Ss2, St1, St2).

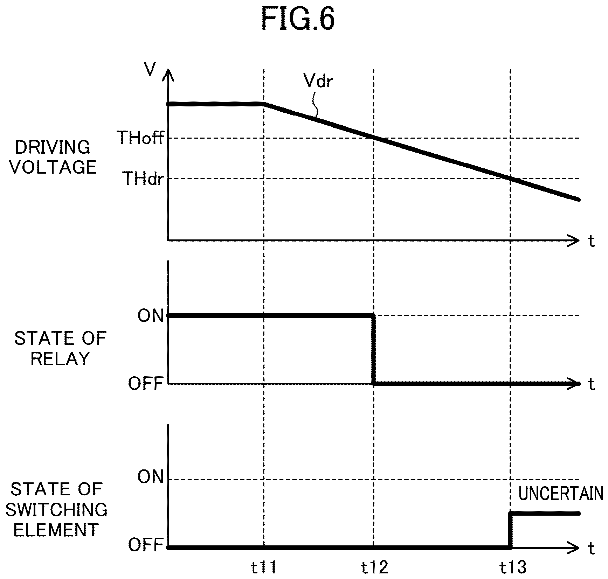

The switching element driving circuit (17b) is supplied with a driving voltage (Vdr) (see FIGS. 6 and 7) as a switch driving voltage and a relay driving voltage, by the power supply circuit (17d). The switching element driving circuit (17b) drives the switching elements (Sr1, Sr2, Ss1, Ss2, St1, St2).

The relay driving circuit (17c) controls the on/off of the main circuit relays (16a) based on the relay control signal (Scr), when the driving voltage (Vdr) is higher than or equal to a predetermined off threshold (THoff). The relay driving circuit (17c) turns off the main circuit relays (16a), if generation of the relay control signal (Scr) is stopped and if the driving voltage (Vdr) is lower than the off threshold (THoff). Here, the off threshold (THoff) is higher than a value (THdr) of the switch driving voltage (hereinafter referred to as a "required voltage value (THdr)") required for the switching element driving circuit (17b) to normally drive the switching elements (Sr1, Sr2, Ss1, Ss2, St1, St2). This required voltage value (THdr) is about 4 V.

The power supply circuit (17d) supplies the driving voltage (Vdr) to the switching element driving circuit (17b), the relay driving circuit (17c), and the control unit power supply (17e) using the electric power from the three-phase AC power supply (2). That is, the driving voltages (Vdr) of the switching element driving circuit (17b) and the relay driving circuit (17c) are supplied from the common power supply circuit (17d). The power supply circuit (17d) constitutes the switching element driving power supply. The power supply circuit (17d) receives the electric power from two of three-phase electric paths between the three-phase AC power supply (2) and the filter reactors (14).

The control unit power supply (17e) generates the control voltage (Vcon) using the driving voltage (Vdr) and supplies the generated control voltage (Vcon) to the control unit (17a). That is, the control unit power supply (17e) supplies the control voltage (Vcon) to the control unit (17a) using the electric power from the three-phase AC power supply (2).

The detector (18) detects the voltage of the smoothing capacitor (12).

Two input nodes of the inverter circuit (20) are connected to respective ends of the smoothing capacitor (12). The inverter circuit (20) includes multiple transistors. The inverter circuit (20) converts the DC power output from the converter device (10) into AC power through switching operation of these transistors, and supplies the obtained AC power to the compressor (300). In this manner, the compressor (300) is supplied with the electric power generated by the power converter (100).

The inverter control device (21) controls the on/off of the transistors of the inverter circuit (20).

FIG. 6 is a timing diagram illustrating the driving voltage (Vdr), the state of the main circuit relays (16a), and the state of the switching elements (Sr1, Sr2, Ss1, Ss2, St1, St2) at the time of a power failure. In the example of FIG. 6, the required voltage value (THdr) and the off threshold (THoff) are set so that the driving voltage (Vdr) becomes lower than the off threshold (THoff) before the driving voltage (Vdr) becomes lower than the required voltage value (THdr), when the amplitude of the voltage input to the power converter (100) decreases.

In the example of FIG. 6, at the occurrence of a power failure, the amplitude of the voltage input to the power converter (100) starts decreasing, and the driving voltage (Vdr) starts decreasing at the timing t11. Then, at the timing t12, when the driving voltage (Vdr) becomes lower than the off threshold (THoff), the relay driving circuit (17c) turns off the two main circuit relays (16a). After that, at the timing t13, the driving voltage (Vdr) becomes lower than the required voltage value (THdr), and the on/off of the switching elements (Sr1, Sr2, Ss1, Ss2, St1, St2) becomes uncertain. At this time, since the two main circuit relays (16a) are in the off-state, even if the supply of power restarts in this state, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

In this first embodiment, the driving voltages (Vdr) are supplied from the common power supply circuit (17d) to the switching element driving circuit (17b) and the relay driving circuit (17c). The driving voltage (Vdr) supplied to the switching element driving circuit (17b) and the driving voltage (Vdr) supplied to the relay driving circuit (17c) can thus be reliably equal to each other. When the switch driving voltage (Vdr) decreases, the two main circuit relays (16a) can be reliably turned into off-state before the on/off of the switching elements (Sr1, Sr2, Ss1, Ss2, St1, St2) becomes uncertain.

FIG. 7 is a timing diagram illustrating the driving voltage (Vdr), the control voltage (Vcon), the state of the main circuit relays (16a), and the state of the switching elements (Sr1, Sr2, Ss1, Ss2, St1, St2) at the time of a power failure. In the example of FIG. 7, the control threshold (THm) and the required voltage value (THdr) are set so that the control voltage (Vcon) becomes lower than the control threshold (THm) before the driving voltage (Vdr) becomes lower than the required voltage value (THdr), when the amplitude of the voltage input to the power converter (100) decreases.

In the example of FIG. 7, at the occurrence of a power failure, the amplitude of the voltage input to the power converter (100) starts decreasing, and the driving voltage (Vdr) and the control voltage (Vcon) start decreasing at the timing t21. At the timing t22, once the control voltage (Vcon) becomes lower than the control threshold (THm), the control unit (17a) stops generating the relay control signal (Scr), and the relay driving circuit (17c) turns off the two main circuit relays (16a). After that, at the timing t23, the driving voltage (Vdr) becomes lower than the required voltage value (THdr), and the on/off of the switching elements (Sr1, Sr2, Ss1, Ss2, St1, St2) becomes uncertain. At this time, since the two main circuit relays (16a) are in the off-state, even if the supply of power restarts in this state, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage. In this manner, once the amplitude of the voltage input to the power converter (100) decreases, the control voltage (Vcon) becomes lower than the control threshold (THm) before the switch driving voltage (Vdr) becomes lower than the voltage (THdr) required for normal driving of the switching elements (Sr1, Sr2, Ss1, Ss2, St1, St2).

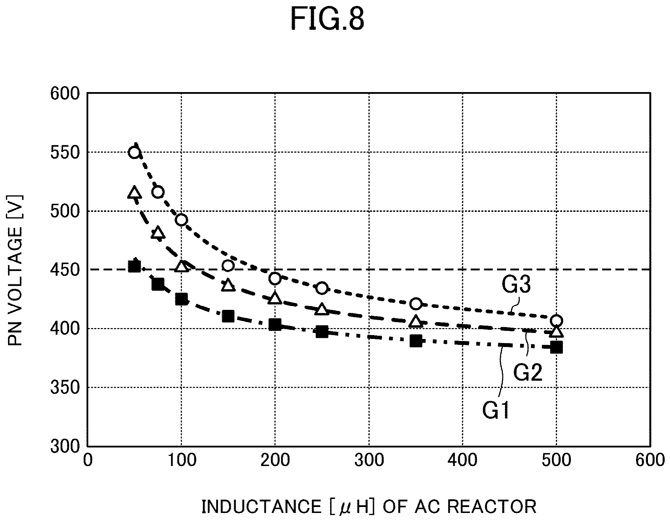

In FIG. 8, the graph G1 shows the relationship between the inductance of the AC reactors (13) and the PN voltage (Vdc) with no current limiting circuit (16) provided and the capacitance of the filter capacitors (15) set to 1.1 $\mu$F. The graph

G2 shows the relationship between the inductance of the AC reactors (13) and the PN voltage (Vdc) with no current limiting circuit (16) provided and the capacitance of the filter capacitors (15) set to 2.2 μF. The graph G3 shows the relationship between the inductance of the AC reactors (13) and the PN voltage (Vdc) with no current limiting circuit (16) provided and the capacitance of the filter capacitors (15) set to 3.3 μF. The PN voltage (Vdc) shown in the graphs G1 to G3 corresponds to the peak value of the PN voltage at the time of power-on.

Here, Vmax (V) represents the maximum voltage value input from the three-phase AC power supply (2) to the power converter (100), La (μH) represents the inductance of the AC reactors (13), Vpn (V) represents the PN voltage (Vdc), Cf (μF) represents the capacitive component between the phases, that is, the capacitance of the filter capacitors (15), and Lf (μH) represents the inductance of the filter capacitors (15).

The graphs G1, G2, and G3 are derived under the conditions that the following Equations (3) and (4) hold.

Based on the graphs G1, G2, and G3, the PN voltage (Vdc) is expressed by the following Equation (5).

$$\text{Vmax} = 230 * 1.1 \; (\text{V}) \ldots (3)$$

$$\text{Lf} = \text{La}/4 \ldots (4)$$

$$\text{Vpn} = \{(1.33 * \text{La}^{-3/5}) * (1.15 + \text{Cf}) + 1\} * \sqrt{2}$$

$$*\text{Vmax} \ldots (5)$$

The condition for making the PN voltage (Vdc) expressed by the Equation (5) higher than the withstand voltages (i.e., the rated values) of the switching elements (Sr1, Sr2, Ss1, Ss2, St1, St2) is expressed by the following Expression (6). Here, Vp (V) represents the withstand voltage of the switching elements (Sr1, Sr2, Ss1, Ss2, St1, St2).

$$\{(1.33 * \text{La}^{-3/5}) * (1.15 + \text{Cf}) + 1\} * \sqrt{2} * \text{Vmax} > \text{Vp} \quad \ldots (6)$$

By transforming this expression (6), the expression (1) described above is derived.

If no current limiting circuit (16) is provided and the inductance of the AC reactors (13) is set so that the expression (1) described above holds, the PN voltage (Vdc) thus becomes higher than the withstand voltage of the switching elements (Sr1, Sr2, Ss1, Ss2, St1, St2).

In this first embodiment, even if the inductance of the AC reactors (13) is set so that the expression (1) holds, the inrush current flowing through the converter unit (11) and the peak value of the voltage applied to the switching elements (Sr1, Sr2, Ss1, Ss2, St1, St2) of the converter unit (11) can be reduced by turning off the main circuit relays (16a) at the time of power-on and restoration from a power failure. This can reduce destruction of the switching elements (Sr1, Sr2, Ss1, Ss2, St1, St2) of the converter unit (11) due to an overvoltage at the time of power-on and restoration from the power failure.

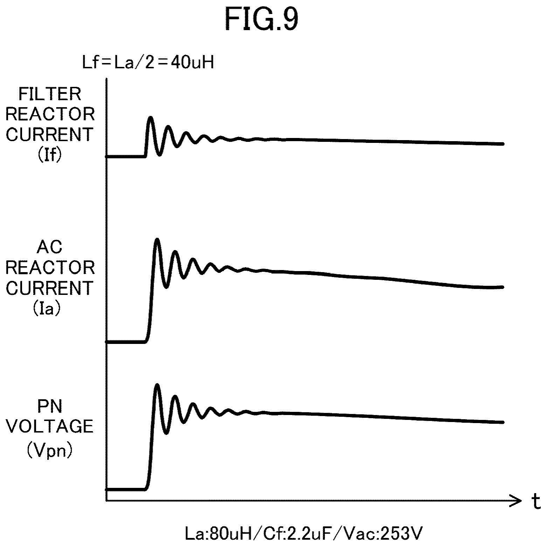

FIG. 9 is a timing diagram showing waveforms of a filter reactor current (If), an AC reactor current (Ia), and a PN voltage (Vdc) at the time of power-on, where the inductance of the filter reactors (14) is 40 μH, the inductance of the AC reactors (13) is 80 μH, the capacitance of the filter capacitors (15) is 2.2 μF, and the effective value of the voltage input to the power converter (100) is 253 V.

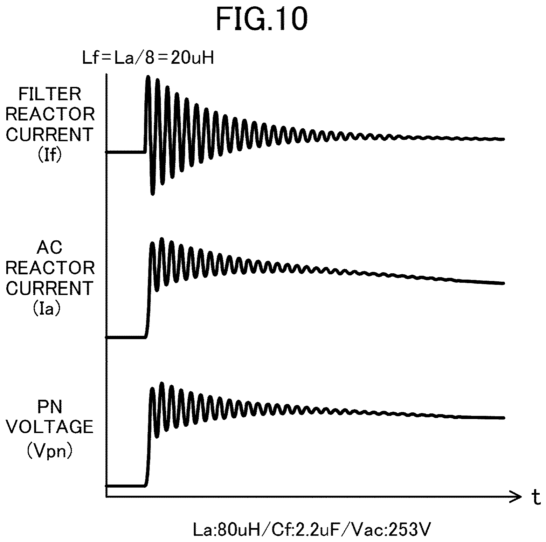

FIG. 10 is a timing diagram showing waveforms of a filter reactor current (If), an AC reactor current (Ia), and a PN voltage (Vdc) at the time of power-on, where the inductance of the filter reactors (14) is 20 μH, the inductance of the AC reactors (13) is 80 μH, the capacitance of the filter capacitors (15) is 2.2 μF, and the effective value of the voltage input to the power converter (100) is 253 V.

Referring to FIGS. 9 and 10, it is found that the filter reactor current (If) flowing through the filter reactors (14) and the AC reactor current (Ia) flowing through the AC reactors (13) at the time of power-on and the high frequency component of the PN voltage (Vdc) are reduced by increasing the inductance of the filter reactors (14).

In this first embodiment, the inductance of the filter reactors (14) is set to one eighth or more the inductance of the AC reactors (13). Accordingly, as compared with the case where the inductance is smaller than one eighth, a high-frequency current flowing between the filter reactors (14) and the three-phase AC power supply (2) can be reduced more effectively at the time of power-on.

The inductance of the filter reactors (14) is set to the half or less the inductance of the AC reactors (13). Accordingly, the filter reactors (14) can be smaller than in the case where the inductance is larger than the half, which can downsize the power converter (100).

When the main circuit relays (16a) are turned on while the on/off of the switching elements (Sr1, Sr2, Ss1, Ss2, St1, St2) is uncertain, the switching elements (Sr1, Sr2, Ss1, Ss2, St1, St2) may malfunction due to external noise, for example, which may cause destruction of the switching elements (Sr1, Sr2, Ss1, Ss2, St1, St2). In this first embodiment, as described with reference to FIG. 5, the control unit (17a) turns on the main circuit relays (16a) with the switching elements (Sr1, Sr2, Ss1, Ss2, St1, St2) turned off, which can reduce such destruction of the switching elements (Sr1, Sr2, Ss1, Ss2, St1, St2).

In this first embodiment, once the voltage of the smoothing capacitor (12) becomes lower than or equal to the predetermined capacitor voltage threshold due to a power failure, the two main circuit relays (16a) are turned off by the control unit (17a). After that, once the power supply restarts, the current from the three-phase AC power supply (2) flows through the current limiting element (16b) to the smoothing capacitor (12). This reduces the inrush current flowing through the converter unit (11) at the restart of the power supply after the power failure, which can reduce destruction of the switching elements (Sr1, Sr2, Ss1, Ss2, St1, St2) of the converter unit (11) due to an overvoltage.

The switching elements (Sr1, Sr2, Ss1, Ss2, St1, St2) are unipolar devices mainly made of wide-bandgap semiconductor. This can increase the switching frequency of the switching elements (Sr1, Sr2, Ss1, Ss2, St1, St2) and decrease the inductance of the AC reactors (13).

By turning the two main circuit relays (16a) into off-state in a standby state in which the air conditioning system (1) is not operating, a reactive current flowing through the filter capacitors (15) can be reduced. Accordingly, a decrease in the power factor and an increase in the system voltage can be reduced.

(Second Embodiment)

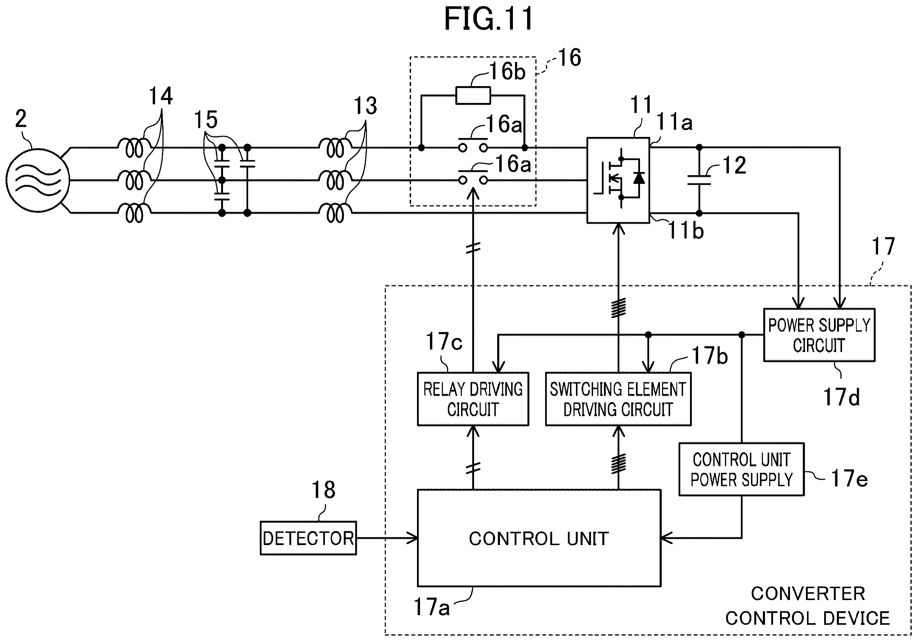

FIG. 11 is a diagram corresponding to FIG. 4 and illustrating a second embodiment. In this second embodiment, two main circuit relays (16a) are connected between the AC reactors (13) and the converter unit (11). The power supply circuit (17d) receives the electric power from both ends of the smoothing capacitor (12).

The other configurations are the same as, or similar to, those of the first embodiment. Thus, the like reference characters are used to indicate the like components, and the detailed description will be omitted.

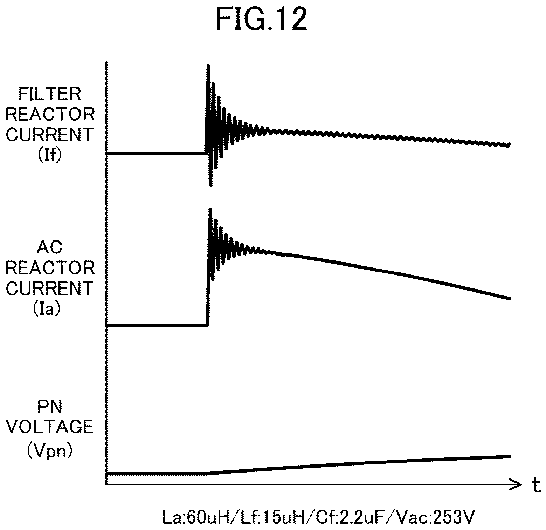

FIG. 12 shows the waveforms of the filter reactor current (If), the AC reactor current (Ia), and the PN voltage (Vdc) at the start of power supply by the three-phase AC power supply (2) with the two main circuit relays (16a) turned off, where the inductance of the filter reactors (14) is 15 $\mu$H, the inductance of the AC reactors (13) is 60 $\mu$H, the capacitance of the filter capacitors (15) is 2.2 $\mu$F, and the effective value of the voltage input to the power converter (100) is 253 V in the second embodiment.

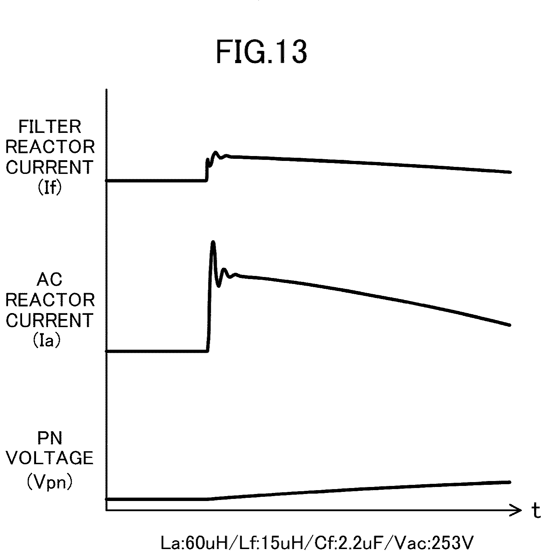

FIG. 13 shows the waveforms of the filter reactor current (If), the AC reactor current (Ia), and the PN voltage (Vdc) at the start of power supply by the three-phase AC power supply (2) with the two main circuit relays (16a) turned off, where the inductance of the filter reactors (14) is 15 $\mu$H, the inductance of the AC reactors (13) is 60 $\mu$H, the capacitance of the filter capacitors (15) is 2.2 $\mu$F, and the effective value of the voltage input to the power converter (100) is 253 V in the first embodiment.

Referring to FIGS. 12 and 13, it is found that the filter reactor current (If) and the AC reactor current (Ia) at the start of power supply by the three-phase AC power supply (2) with the main circuit relays (16a) turned off are smaller when the two main circuit relays (16a) are connected between the three-phase AC power supply (2) and the filter reactors (14), that is, closer to the three-phase AC power supply (2) than the filter capacitors (15) are, than when the two main circuit relays (16a) are connected between the AC reactors (13) and the converter unit (11), that is, closer to the converter unit (11) than the filter capacitors (15) are.

In the first embodiment, at the time of power-on and restoration from a power failure, the two main circuit relays (16a) are turned off, which can reduce the inrush current flowing through the filter reactors (14), the AC reactors (13), and the filter capacitors (15), as compared with the second embodiment. The first embodiment can reduce the heat generation at the filter reactors (14) and the AC reactors (13) and a decrease in the capacitance of the filter capacitors (15), as compared with the second embodiment.

(Third Embodiment)

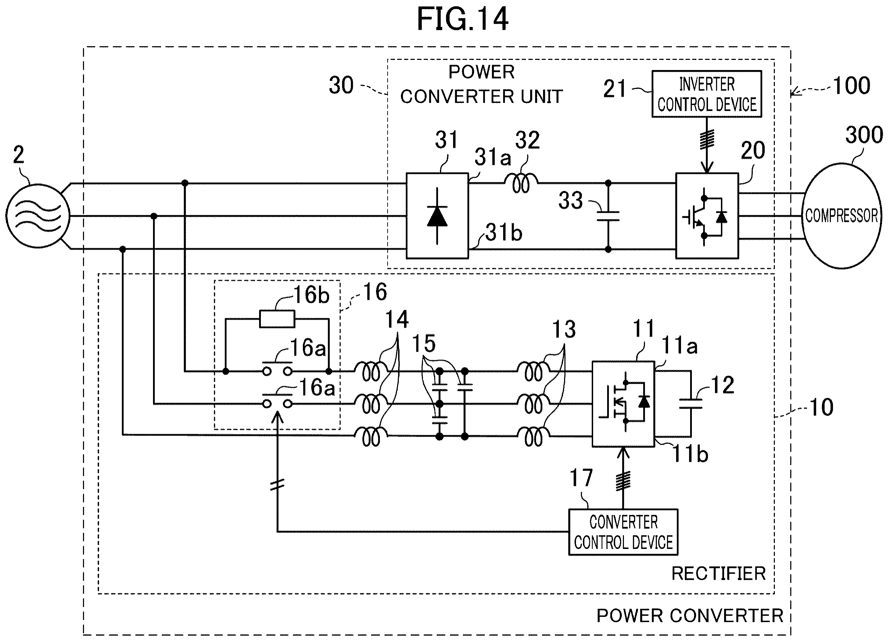

FIG. 14 is a view corresponding to FIG. 2 and illustrating a third embodiment. In this third embodiment, the power converter (100) includes a power converter unit (30) and a converter device (10).

The power converter unit (30) includes a rectifier circuit (31), an inverter circuit (20), an inverter control device (21), a power conversion unit reactor (32), and a link capacitor (33).

The rectifier circuit (31) rectifies, into a direct current, a three-phase AC input from the three-phase AC power supply (2) through three-phase electric paths, and outputs the obtained direct current to first and second output ends (31a, 31b).

Two input nodes of the inverter circuit (20) are connected to the first and second output ends (31a, 31b) of the rectifier circuit (31), respectively.

The power conversion unit reactor (32) is interposed between the first output end (31a) of the rectifier circuit (31) and one of the input nodes of the inverter circuit (20).

The link capacitor (33) is connected between the input nodes of the inverter circuit (20).

The converter device (10) constitutes a current compensation unit that causes a compensation current to flow through the three-phase AC power supply (2).

The other configurations are the same as, or similar to, those of the first embodiment. Thus, the like reference characters are used to indicate the like components, and the detailed description will be omitted.

(Other Embodiments)

In the first to third embodiments, the control unit (17a) may generate the relay control signal (Scr) to turn off the two main circuit relays (16a) when the driving voltage (Vdr) fed by the power supply circuit (17d) becomes lower than or equal to a predetermined drive threshold. This drive threshold is set within a range from about 10 V to about 12 V that is higher than the required voltage value (THdr). In this manner, the drive threshold is set to be higher than or equal to the driving voltage (Vdr), at which the on/off of the switching elements (Sr1, Sr2, Ss1, Ss2, St1, St2) is uncertain, which can reduce the uncertainty of the on/off of the switching elements (Sr1, Sr2, Ss1, Ss2, St1, St2) before the main circuit relays (16a) are turned off.

In the first to third embodiments, the turn-off requirement is that the value detected by the detector (18), that is, the voltage of the smoothing capacitor (12) is lower than or equal to the predetermined capacitor voltage threshold. The turn-off requirement may be that the value detected by the detector (18), that is, the amount of decrease in the voltage of the smoothing capacitor (12) per predetermined unit of time becomes larger than or equal to the predetermined decrease amount threshold. The detector (18) may detect the voltage of the power converter (100) received from the three-phase AC power supply (2) instead of the voltage of the smoothing capacitor (12). The turn-off requirement may be that the voltage drop state, in which the value detected by the detector (18), that is, the voltage received from the three-phase AC power supply (2) becomes lower than a predetermined power supply voltage threshold, continues for a predetermined time.

In the first to third embodiments described above, the control unit power supply (17e) that supplies the control voltage (Vcon) is provided separately from the power supply circuit (17d) that supplies the driving voltage (Vdr). Alternatively, no control unit power supply (17e) may be provided and the driving voltage (Vdr) may be used as the control voltage (Vcon).

In the first to third embodiments, the filter capacitors (15) form a delta connection, but may form a star connection. In this case, the inductance of the AC reactors (13) is set so that the expression (1) described above holds, where Cf ($\mu$F) represents the capacitive component between the phases.

If the power converter (100) is an intelligent power module (IPM) including the switching elements (Sr1, Sr2, Ss1, Ss2, St1, St2), the switching element driving circuit (17b), and the control (protection) unit in the same module, the breakdown voltage Vp (V) may be the withstand voltage of the IPM, and the required voltage value (THdr) of the driving voltage (Vdr) may be the required voltage of the control power supply voltage of the IPM. Here, the withstand voltage of the IPM is the maximum voltage that is applicable between the PN of the IPM with the switching elements (Sr1, Sr2, Ss1, Ss2, St1, St2) in the off-state.

While the embodiments have been described above, it will be understood that various changes in form and details can be made without departing from the spirit and scope of the claims. The embodiments and variations described above may be appropriately combined or modified by replacing the elements as long as the functions of the subject matter of the present disclosure are not impaired.

INDUSTRIAL APPLICABILITY

The present disclosure is useful as a power converter including a converter unit connected to a three-phase AC power supply via a reactor, and an air conditioning system including the power converter.

DESCRIPTION OF REFERENCE CHARACTERS

| | |
|---|---|
| 1 | Air Conditioning System |
| 2 | Three-Phase AC Power Supply |
| 100 | Power Converter |
| 300 | Compressor |
| 11 | Converter Unit |
| 11a, 11bDC | Node |
| 12 | Smoothing Capacitor |

| | |
|---|---|
| 13 | AC Reactor |
| 14 | Filter Reactor |
| 15 | Filter Capacitor (Capacitive Component) |
| 16 | Current Limiting Circuit |
| 16a | Main Circuit Relay |
| 16b | Current Limiting Element |
| 17a | Control Unit |
| 17b | Switching Element Driving Circuit |
| 17c | Relay Driving Circuit |
| 17d | Power Supply Circuit |
| 17e | Control Unit Power Supply |
| Sr1, Sr2, Ss1, Ss2, St1, St2 | Switching Element |
| Scr | Relay Control Signal |
| Vdr | Driving Voltage (Switch Driving Voltage, Relay Driving Voltage) |
| Vcon | Control Voltage |
| THdr | Required Voltage Value |
| THoff | Off Threshold |
| THm | Control Threshold |

**Claims**

1. A power converter comprising:

   a converter unit (11) connected to a three-phase alternating current (AC) power supply (2) via AC reactors (13) provided for respective phases, and including multiple switching elements (Sr1, Sr2, Ss1, Ss2, St1, St2);
   a smoothing capacitor (12) connected between DC nodes (11a, 11b) of the converter unit (11);
   filter reactors (14) connected in series with the AC reactors (13) on a side of the AC reactors (13) closer to the three-phase AC power supply (2); and
   capacitive components (15) connected between the filter reactors (14) and the AC reactors (13) and provided between the phases,
   an expression (1) below holding, where Vmax (V) represents a maximum input voltage value of the power converter (100), La ($\mu$H) represents an inductance of the AC reactors (13), Vp (V) represents a withstand voltage of the switching elements (Sr1, Sr2, Ss1, Ss2, St1, St2), and Cf ($\mu$F) represents the capacitive components (15) between the phases,
   the power converter further comprising a current limiting circuit (16) including two main circuit relays (16a) for two of three-phase electric paths between the three-phase AC power supply (2) and the converter unit (11), and a current limiting element (16b) connected in parallel to at least one of the two main circuit relays (16a).

$$\mathrm{La} < [\{\mathrm{Vp}/(\sqrt{2} * \mathrm{Vmax}) - 1\}/\{(1.15 + \mathrm{Cf}) * 1.33\}]^{-5/3} \ldots (1)$$

2. The power converter of claim 1, wherein
   the current limiting circuit (16) is connected between the three-phase AC power supply (2) and the capacitive components (15).

3. The power converter of claim 1 or 2, wherein
   the following expression (2) holds, where Lf($\mu$F) represents an inductance of the filter reactors (14):

$$\mathrm{La}/2 \geq \mathrm{Lf} \geq \mathrm{La}/8 \ldots (2)$$

4. The power converter of any one of claims 1 to 3, further comprising:

   a switching element driving circuit (17b) supplied with a switch driving voltage (Vdr) and configured to drive the switching elements (Sr1, Sr2, Ss1, Ss2, St1, St2); and
   a relay driving circuit (17c) configured to turn off the two main circuit relays (16a), if a relay driving voltage (Vdr) is lower than a predetermined off threshold (THoff), wherein
   the off threshold (THoff) is higher than a value of the switch driving voltage (Vdr) required for the switching element driving circuit (17b) to normally drive the switching elements (Sr1, Sr2, Ss1, Ss2, St1, St2).

5. The power converter of claim 4, wherein the switch driving voltage (Vdr) and the relay driving voltage (Vdr) are supplied from a common power supply circuit (17d).

6. The power converter of any one of claims 1 to 5, further comprising:

a control unit (17a) configured to generate a control signal (Scr) for designating on/off of the two main circuit relays (16a), if a control voltage (Vcon) is higher than or equal to a predetermined control threshold (THm), and stop generating the control signal (Scr), if the control voltage (Vcon) is lower than the control threshold (THm);
a switching element driving circuit (17b) supplied with a switch driving voltage (Vdr) and configured to drive the switching elements (Sr1, Sr2, Ss1, Ss2, St1, St2);
a relay driving circuit (17c) configured to control on/off of the two main circuit relays (16a) based on the control signal (Scr), if a relay driving voltage (Vdr) is higher than or equal to a predetermined off threshold (THoff), and turn off the two main circuit relays (16a), if generation of the control signal (Scr) is stopped and if the relay driving voltage (Vdr) is lower than the off threshold (THoff);
a switching element driving power supply (17d) configured to supply the switch driving voltage (Vdr) to the switching element driving circuit (17b) using electric power from the three-phase AC power supply (2); and
a control unit power supply (17e) configured to supply the control voltage (Vcon) to the control unit (17a) using electric power from the three-phase AC power supply (2), wherein
the control voltage (Vcon) becomes lower than the control threshold (THm) before the switch driving voltage (Vdr) becomes lower than a voltage (THdr) required for normal driving of the switching elements (Sr1, Sr2, Ss1, Ss2, St1, St2), when an amplitude of a voltage input to the power converter (100) decreases.

7. The power converter of any one of claims 1 to 5, further comprising:

a switching element driving circuit (17b) supplied with a switch driving voltage (Vdr) and configured to drive the switching elements (Sr1, Sr2, Ss1, Ss2, St1, St2); and
a control unit (17a) configured to turn off the two main circuit relays (16a) when the switch driving voltage (Vdr) becomes lower than or equal to a predetermined drive threshold.

8. The power converter of any one of claims 1 to 5, further comprising:

a switching element driving circuit (17b) supplied with a switch driving voltage (Vdr) and configured to drive the switching elements (Sr1, Sr2, Ss1, Ss2, St1, St2) based on a control signal (Scr) for designating on/off of the switching elements (Sr1, Sr2, Ss1, Ss2, St1, St2); and
a control unit (17a) configured to turn on the two main circuit relays (16a) with the switching elements (Sr1, Sr2, Ss1, Ss2, St1, St2) turned off, referring to at least one of the control signal (Scr), the switch driving voltage (Vdr), or gate potentials of the switching elements (Sr1, Sr2, Ss1, Ss2, St1, St2), once a predetermined requirement for switching the two main circuit relays (16a) from off to on is met.

9. The power converter of any one of claims 1 to 5, further comprising:
a control unit (17a) configured to turn off the two main circuit relays (16a), once a turn-off requirement is met that a voltage of the smoothing capacitor (12) is lower than or equal to a predetermined capacitor voltage threshold (Vdr).

10. The power converter of any one of claims 1 to 5, further comprising:
a control unit (17a) configured to turn off the two main circuit relays (16a), once a turn-off requirement is met that an amount of decrease in a voltage of the smoothing capacitor (12) per predetermined unit of time is lower than or equal to a predetermined decrease amount threshold.

11. The power converter of any one of claims 1 to 5, further comprising:
a control unit (17a) configured to turn off the two main circuit relays (16a), once a turn-off requirement is met that a voltage drop state in which a voltage received from the three-phase AC power supply (2) is lower than a predetermined power supply voltage threshold continues for a predetermined time.

12. The power converter of any one of claims 9 to 11, wherein
the control unit (17a) turns off the switching elements (Sr1, Sr2, Ss1, Ss2, St1, St2), once the turn-off requirement is met, and then turns off the two main circuit relays (16a).

**13.** The power converter of any one of claims 1 to 12, wherein
the switching elements (Sr1, Sr2, Ss1, Ss2, St1, St2) are unipolar devices mainly made of wide-bandgap semiconductor.

**14.** An air conditioning system comprising:

the power converter of any one of claims 1 to 13; and
a compressor (300) supplied with electric power generated using the power converter (100).

# FIG.1

# FIG.2

EP 4 679 700 A1

# FIG.3

# FIG.4

EP 4 679 700 A1

# FIG.5

START

k = 1, n = 0 — S101

READ GATE POTENTIAL — S102

S103
ARE ALL SWITCHING ELEMENTS OFF? — NO

YES

S104
n = n+1

S105
N ≥ 100? — NO

YES

TURN ON MAIN CIRCUIT RELAY
S106

S107
n = 0

S108
k = k+1

S109
k = 10000 ? — NO

YES — S110
DETERMINE ANOMALY

END

# FIG.6

# FIG.7

# FIG.8

# FIG.9

Lf=La/2=40uH

FILTER
REACTOR
CURRENT
(If)

AC
REACTOR
CURRENT
(Ia)

PN
VOLTAGE
(Vpn)

t

La:80uH/Cf:2.2uF/Vac:253V

# FIG.10

Lf=La/8=20uH

FILTER
REACTOR
CURRENT
(If)

AC
REACTOR
CURRENT
(Ia)

PN
VOLTAGE
(Vpn)

$\longrightarrow$ t

La:80uH/Cf:2.2uF/Vac:253V

## FIG.11

# FIG.12

FILTER REACTOR CURRENT (If)

AC REACTOR CURRENT (Ia)

PN VOLTAGE (Vpn)

t

La:60uH/Lf:15uH/Cf:2.2uF/Vac:253V

# FIG.13

FILTER
REACTOR
CURRENT
(If)

AC
REACTOR
CURRENT
(Ia)

PN
VOLTAGE
(Vpn)

t

La:60uH/Lf:15uH/Cf:2.2uF/Vac:253V

FIG.14

## INTERNATIONAL SEARCH REPORT

| International application No. |
|---|
| **PCT/JP2024/010728** |

**A.    CLASSIFICATION OF SUBJECT MATTER**

*H02M 7/12*(2006.01)i
FI:   H02M7/12 H

According to International Patent Classification (IPC) or to both national classification and IPC

**B.    FIELDS SEARCHED**

Minimum documentation searched (classification system followed by classification symbols)

H02M7/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2006-246699 A (KABUSHIKI KAISHA TOSHIBA) 14 September 2006 (2006-09-14) paragraphs [0047]-[0065], fig. 3 | 1-14 |
| A | JP 2005-117777 A (TOSHIBA ELEVATOR CO., LTD.) 28 April 2005 (2005-04-28) paragraphs [0017]-[0049], fig. 1-14 | 1-14 |
| A | JP 2011-015604 A (DAIKIN INDUSTRIES, LTD.) 20 January 2011 (2011-01-20) fig. 1 | 1-14 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/010728** |

| Patent document cited in search report | | | Publication date (day/month/year) | Patent family member(s) | | | Publication date (day/month/year) |
| --- | --- | --- | --- | --- | --- | --- | --- |
| JP | 2006-246699 | A | 14 September 2006 | (Family: none) | | | |
| JP | 2005-117777 | A | 28 April 2005 | (Family: none) | | | |
| JP | 2011-015604 | A | 20 January 2011 | US | 2012/0063178 | A1 | |
| | | | | fig. 1 | | | |
| | | | | EP | 2439839 | A1 | |
| | | | | CN | 102422518 | A | |
| | | | | KR | 10-2012-0023638 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2020016960 A